# EUROPEAN PATENT APPLICATION

(11) **EP 1 164 752 A1**
(43) Date of publication of application: **19.12.2001**
(21) Application number: 00112510.3
(22) Date of filing: 13.06.2000
(51) Int. Cl.: H04L 12/56, H04L 29/02

(54) **Method for performing hierarchical address translation**

(71) Applicant: MOTOROLA, INC., Schaumburg, IL 60196 (US)
(72) Inventor: Zabarski, Boris, Petah Tikva (IL); Ben Noun, Eitan, 69027 Tel Aviv (IL); Kirzner, Eran, Rishon Le Ziyyon (IL)
(74) Representative: Gibson, Sarah Jane

(57) **Abstract**

A method for translating a hierarchical address, the method comprising the steps of: (A) Providing a tree that stores a plurality of prefixes, the first levels of the tree are organized in single node having multiple sons, an existing son stores a root of a multi-level sub-tree of a first group of sub-trees, each existing sub-tree leaf of the first group of sub-trees is a root of a multi-level sub-tree of a second group of sub-trees; each existing sub-tree leaf of the second group of sub-trees is a root of a multi-level sub-tree of a third group of sub-trees; each existing sub-tree leaf of the third group of sub-trees is a root of a multi-level sub-tree of a fourth group of sub-trees; each multi-level sub-tree further has sub-tree branches; wherein a sub-tree root stores a plurality of sub-tree leaf indications, wherein the sub-tree leaf indicators indicate which of the plurality of possible sub-tree leafs exist. (B) Processing a first portion of a requested destination address and selecting a selected sub-tree out of the first group of sub-trees.(C) Repeating a step of processing consecutive portion of the requested destination address and determining whether a path that represents a prefix continues to lower levels of the tree, until finding an end of a path and providing the best matching prefix.

## Description

### Field of the Invention

The present invention generally relates to a tree based method and an apparatus for performing hierarchical address translation using trees, and especially a method and an apparatus for receiving a destination address, searching a tree database and generating an address of a next hop router.

### Background of the Invention

Internet routers receive data packets containing destination addresses, perform an address translation and forward the data packets according to result of the address translation process. The product of the address translation process is an address of the next hop router. Usually, the destination address has a hierarchical structure. A hierarchical address has an internal structure that can be used in protocol processing of the address. Hierarchical addresses are used in a variety of internet protocols such as IPv6 and IPv4.
Forwarding data packets involve address lookup in a routing database. Various methods and devices for performing forwarding packets are described at U.S. patent No. 5,920,886 of Feldmeier, U.S. patent 5,938,736 of Muller et al, U.S. patent 5,917,821 of Gobuyan et al and U.S. patent 5,953,312 of Crawley et al.
Usually, a routing database does not include all the possible destination addresses, but has a plurality of address prefixes, each representing a group of destination addresses reachable through the same interface. Each prefix is associated with a next hop ID address. The prefixes are of variable length, and a packet should be forwarded to a selected group of destination addresses that are represented by the most specific prefix/ the longest prefix that matches the destination address of the data packet.

A common method for performing hierarchical address translation involves storing the plurality of destination addresses in a tree or a compressed tree and comparing the received address to the content of the tree. Tree is a general purpose data structure for storing strings, whereas each string is represented by a leaf in a tree structure, and the value of the string corresponds to the path from the root of the tree to the leaf. The usage of a tree in the context of IP address lookup is described in the following articles: (1) S. Nilsson, G. Karlsson: "IP-Address Lookup Using LC-Trees", IEEE Journal on selected areas in communications, Vol. 17, No. 6, June 1999; and (2) M. Degermark, A. Brodnik, S. Carlsson, S. Pink: "Small Forwarding Tables for Fast Routing Lookups", ACM SIGCOMM 97, October 1997.

In such a tree, the search for the longest matching prefix is replaced by a search for a the longest path from the root of the tree to a leaf.

Prior art solutions suffered from various problems, such as being memory consuming or relatively slow, their performance are data dependent, involve complex computations.

There is a need of an improved method and apparatus for performing a tree based hierarchical address translation. Especially there is a need for a method and a device that are fast and are cost effective. Furthermore, there is a need of a method and device for translating a hierarchical address that consume less memory space than prior art method and devices.

### Brief description of the Drawings

While the invention is pointed out with particularity in the appended claims, other features of the invention are disclosed by the following detailed description taken in conjunction with the accompanying drawings, in which:
- FIG. 1: is a schematic description of an N level tree of binary strings, according to a preferred embodiment of the invention;
- FIGS. 2-4: are schematic flow charts of a method for performing hierarchical address translation, according to a preferred embodiment of the invention.

### Detailed description of the Drawings

The invention provides an improved tree based device and method for performing hierarchical address translation. The invention provides a routing table for storing a plurality of prefixes in a multi-level non-complete tree structure, wherein at least some levels of said tree are arranges as sub-trees, each sub-tree has a sub-tree root, a plurality of possible sub-tree leafs and sub-tree internal nodes, whereas each sub-tree root stores a plurality of sub-tree leaf indications, a plurality of sub-tree internal node indications, wherein the sub-tree leaf indicators indicate which of the plurality of possible sub-tree leafs exist, and the plurality of the sub-tree internal node indicators indicate which of a possible set of sub-tree internal node exist. During a search for the best matching prefix the plurality of leaf indicators are checked in order to determine whether a requested path representing a best matching prefix ends before reaching the sub-tree leafs, if the answer is 'no' the search continues, and if the answer is 'yes' the plurality of sub-tree internal node indicators are checked in order to determine whether a requested path ends within the sub-tree. Optionally, the plurality of sub-tree internal node indications are replaced by a list of next hop ID, whereas a portion of the requested destination address is used as an index into said list.

The invention provides a method for performing address translation comprising the steps of : (A) receiving a requested destination address and accessing a tree that stores a plurality of prefixes, the tree comprising of a plurality of sub-trees having sub-trees roots, sub-tree internal nodes and sub-trees leafs, wherein a sub-tree root stores a plurality of sub-tree leaf indications, wherein the sub-tree leaf indicators indicate which of the plurality of possible sub-tree leafs exist. (B) Processing a portion of a requested destination address and selecting a selected sub-tree out of the plurality of sub-trees. (C) Processing another portion of the requested destination address and determining whether a path that represents a prefix continues to lower levels of the tree. (D) Continuing the search in said lower levels of the tree if the answer is 'yes'. (E) Processing the selected sub-tree to determine whether a path that represents a prefix ends within the selected sub-tree; if the answer is 'yes' using the content of the selected sub-tree root to fetch the next hop ID; if the answer is 'no' searching the higher levels of the tree; and (F) repeating the steps of processing portions of a requested destination address until a best matching prefix is found, and providing a next hop ID associated to the best matching prefix.

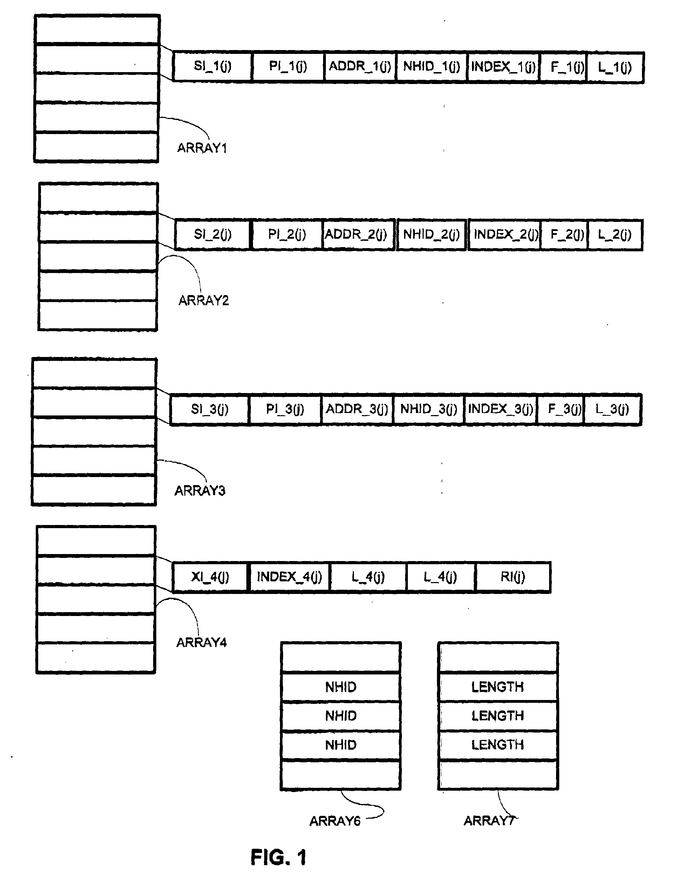

The invention provides a method for translating a hierarchical address, the method comprising the steps of: (A) Receiving a requested destination address and accessing a tree that stores a plurality of prefixes, the first levels of the tree are organized in single node having multiple sons, an existing son stores a root of a multi-level sub-tree of a first group of sub-trees, each existing sub-tree leaf of the first group of sub-trees is a root of a multi-level sub-tree of a second group of sub-trees; each existing sub-tree leaf of the second group of sub-trees is a root of a multi-level sub-tree of a third group of sub-trees; each existing sub-tree leaf of the third group of sub-trees is a root of a multi-level sub-tree of a fourth group of sub-trees; each multi-level sub-tree further has sub-tree branches; wherein a sub-tree root stores a plurality of sub-tree leaf indications, wherein the sub-tree leaf indicators indicate which of the plurality of possible sub-tree leafs exist. (B) Processing a first portion of a requested destination address and selecting a selected sub-tree out of the first group of sub-trees. (C) Repeating a step of processing consecutive portion of the requested destination address and determining whether a path that represents a prefix continues to lower levels of the tree, until finding an end of a path and providing the best matching prefix.
The existing sub-tree leafs of each sub-tree are stored in consecutive order, starting at a sub-tree leaf address, pointed by a sub-tree leaf pointer.
Conveniently, each sub-tree root further stores the sub-tree leaf address, a next hop ID index and a backtrack field F. Preferably, each sub-tree further stores a list field, indicating if a multi-level sub-tree is replaced by a list.
An aspect of the invention is that the method required only few accesses to memory modules. Said aspect is important when said translation is to be made at highspeed. Usually, the nodes of a tree are stored in an external memory module while portions of a received destination address and variables to be used during the translation process are stored in register means. FIG. 1 is a schematic description of an N-level tree 10, according to a preferred embodiment of the invention. For convenience of explanation it is assumed that N equals 32. Tree 10 is non complete - a node in the tree can have either no child, one child or two children. A first level of the tree comprise of a single node having 4096 possible sons. Each existing son of the single node is a root of a 5-level sub-tree of a first group of sub-trees. Each existing sub-tree leaf of the first group of sub-trees is a root of a 5-level sub-tree of a second group of sub-trees. Each existing sub-tree leaf of the second group of sub-trees is a root of a 5-level sub-tree of a third group of sub-trees. Each existing sub-tree leaf of the third group of sub-trees is a root of a 5-level sub-tree of a fourth group of sub-trees. Accordingly, the first 12 most significant bits are used to search the first level, while the other four portions of 5 bits each are used to search the second till fourth level sub-trees.

The single node is stored in a 4096 entry array denoted ARRAY1. Each entry of said ARRAY1 comprises of the following fields: (A) 32 sub-tree leaf indications, each indication is one bit long, each indication denoted SI_1(j,n) whereas n ranges between 1 and 32, and j ranges between 1 and 4096. (B) 32 sub-tree internal node indications, each indication is one bit long, each indication denoted PI_1(j,n) whereas n ranges between 1 and 32, and j ranges between 1 and 4096. Optionally PI_1(I,j) are replaced by a list of 31 NHIDs. (C) A 30-bit sub-tree leaf address ADDR_1(j), said address points to a leftmost sub-tree leaf, said leaf is followed by other existing sub-tree leafs of the same sub-tree. (D) A next hop ID field NHID_1(j) used to point to a next hop ID of prefixes that are shorter than 13 bits. Said next hop ID are conveniently stored in a next hop ID array (ARRAY6), whereas the lengths of the prefixes that are smaller than 12 bits are stored in another 4096 entry array (ARRAY7). (E) A next hop ID index field INDEX_1(j), pointing to a list of prefixes that range between 17 bits long and 13 bits long. (F) a list field L_1(j). Conveniently, each entry has two portions, a first portion stores fields (A), (C), and (F) and a second portion that stores fields (B), (D) and (E).

A second and a third arrays ARRAY2 and ARRAY3 are used to store roots of sub-trees of the second and third group of the sub-trees. Each entry comprises of the following fields: (A) 32 sub-tree leaf indications, each indication is one bit long, an indication denoted SI_2(j,n) (of the second group) and SI_3(j,n) (of the third group) whereas n ranges between 1 and 32, and j ranges between 1 and 32. (B) 31 sub-tree internal node indications, each indication is one bit long, an indication denoted PI_2(j,n) (of the second group) and PI_3(j,n) (of the third group) whereas n ranges between 1 and 32, and j ranges between 1 and 32. (C) A 30-bit sub-tree leaf address ADDR_2(j) or ADDR_3(j) , said address points to a leftmost sub-tree leaf, said leaf is followed by other existing sub-tree leafs of the same sub-tree. (D) A next hop ID index field INDEX_2(j) or INDEX_3(j), pointing to a list of up to 32*32 next hop ID. (E) A list field L_2(j) or L_3(j). (F) A backtrack field F_2(j) of F_3(j). Conveniently, each entry has two portions, a first portion stores fields (A), (C), (E) and (F) and a second portion that stores fields (B) and (D).

A fourth array ARRAY4 is used to store the root of a sub-trees of the fourth group of sub-trees stores. Each entry comprises of: (A) 32 sub-tree prefix indications, each indication is one bit long, each indication denoted XI(j,n) whereas n ranges between 1 and 32, and j ranges between 1 and 32, indicating if there is within said sub-tree ends a valid prefix. (B) A next hop ID index field INDEX_4(j), pointing to a list of up to 32*32 next hop ID. (C) A list field L_4(j). (D) A backtrack field F_4(j). (E) A repeat indicator field RI(n,j), indicating whether an adjacent sub-tree leaf has a same next hop ID.

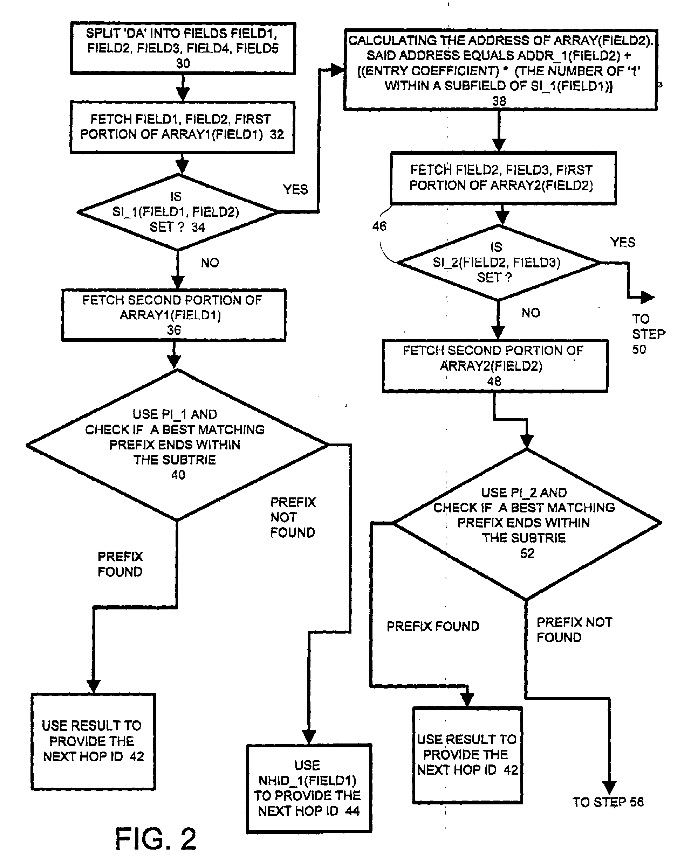

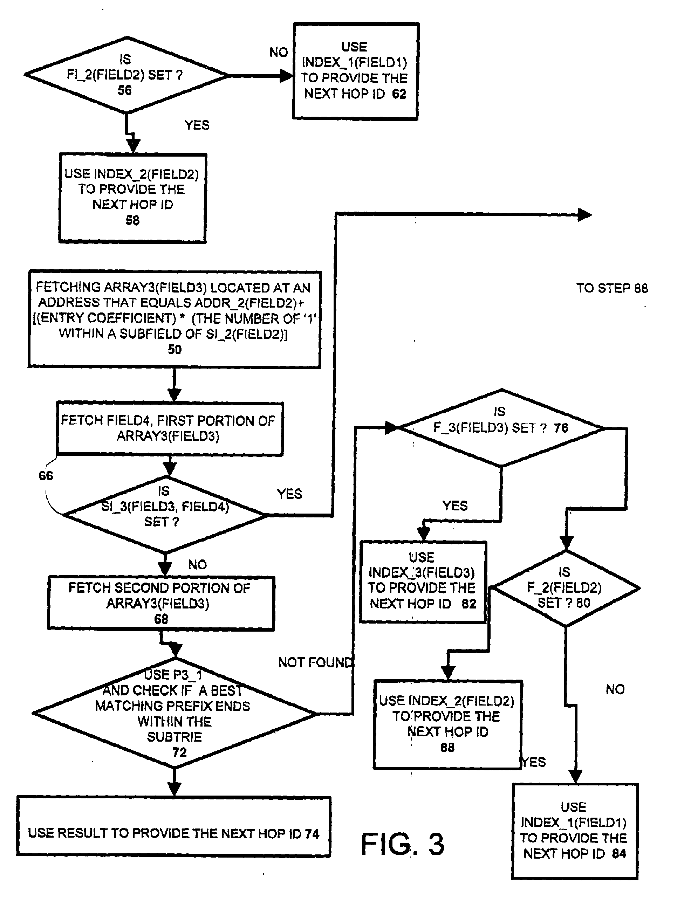

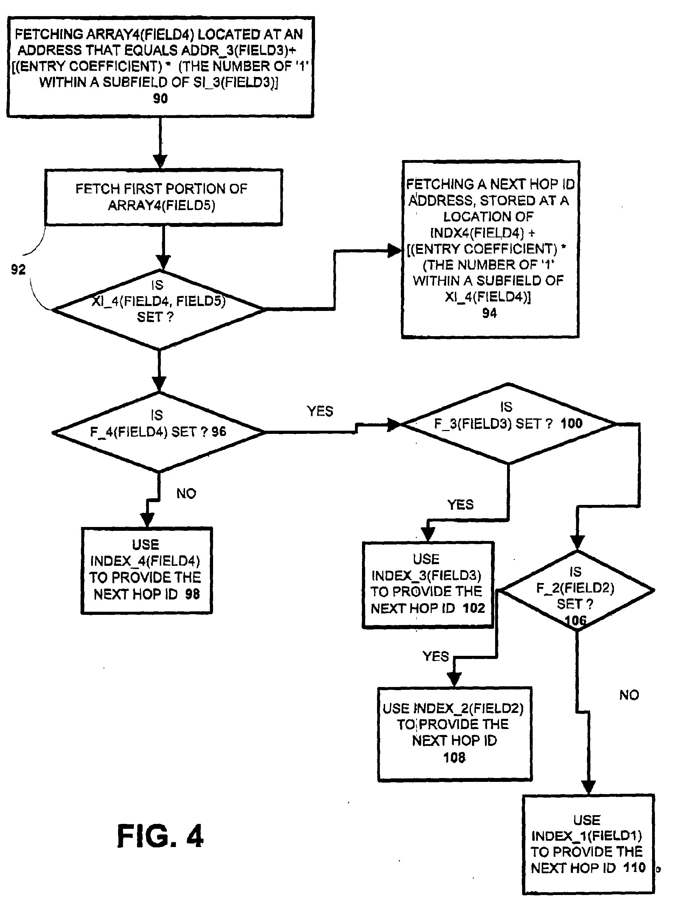

Referring to FIG. 2-4, illustrating a method for performing hierarchical address translation, according to a preferred embodiment of the invention. A search for a best matching prefix within such an array starts by step 30 of splitting a received destination address DA to five fields: field1=DA [0:11], field2=DA [12:16], field3=DA [17:21], field4=DA [22:26], field5=DA [27:31].

Conveniently, computed addresses, said five portions of a received destination address and entrees that are used during a forward tree search process, are kept in registers in case there is a need to backtrack.

Step 30 is followed by step 32 of reading field1 and field2, preferably from an internal register means, fetching a first portion of ARRAY1(field1) - the (field1)'th entry of ARRAY1, preferably from an external memory module. Step 32 is followed by step 34 of checking the (field2)'th bit of SI_1, denoted SI_1(field1, field2). If SI_1(field1, field2) is reset, indicating that there a (field2)'th root of the (field1)'th sub-tree of the first group of sub-trees does not exist then step 34 is followed by step 36, else step 34 is followed by step 38.

Step 36 of searching for a prefix ending at sub-tree branch starts by fetching the second portion of ARRAY1(field1). Step 36 is followed by step 40 of checking PI_1(field1) and performing a best matching prefix search within the (field1)'th sub-tree. If such a prefix is found step 40 is followed by step 42 of using the next hop ID index INDEX_1(field2) and the results of said search to provide the next hop ID. Else, step 40 is followed by step 44 of using the next hop ID field NHID_1(field1) to provide the next hop ID.

Step 38 of fetching a root of the (field2)'th sub-tree of the second group of sub-trees starts by calculating the address of said sub-tree root. The calculation involves counting the number of '1' within a sub-field of SI_1(field1), said sub-field ranges between SI_1(field1,1) and SI_1(field1,field2). Said count is multiplied by a entry coefficient to form a root offset, the entry coefficient indicating a length of each entry. The offset is added to the 30-bit sub-tree leaf address ADDR_1(field2) to provide an address of the root of the (field2)'th sub-tree of the second group of sub-trees, said root is stored at ARRAY2(field2).

Step 38 is followed by step 46 of fetching field3 and a first portion of ARRAY2(field2) and of checking the (field3)'th bit of SI_2(field2), denoted SI_2(field2, field3). If SI_2(field2, field3) is reset, indicating that a (field3)'th leaf of the (field2)'th sub-tree of the first group of sub-trees does not exist, then step 46 is followed by step 48, else step 46 is followed by step 50.

Step 48 of searching for a prefix ending within a sub-tree branch starts by fetching the second portion of ARRAY2(field2) . Step 48 is followed by step 52 of checking PI_2(field2) and performing a best matching prefix search within the (field2)'th sub-tree. If such a prefix is found step 52 is followed by step 54 of using the next hop ID index INDEX_1(field2) and the results of said search to provide the next hop ID. Else, step 52 is followed by step 56 of checking F_2(field2). If F_2(field2) is set then step 56 is followed by step 58 of using INDEX_2(field2) to provide the next hop ID. If F_2(field2) is reset then step 56 is followed by step 62 of using INDEX_1(field1) to provide the next hop ID.

Step 54 of fetching a second portion of ARRAY2(field2), calculating a location of a next hop ID and providing said next hop ID. The calculation involves counting the number of '1' within a sub-field of PI_2(field2), said sub-field ranges between PI_2(field2,1) and PI_1(field2,field3). Said count is multiplied by an entry coefficient to form a next hop ID offset, the next hop ID offset is added to the next hop ID index field INDEX_2(field2) to provide the location of the next hop ID.

Step 50 of fetching a root sub-tree of the third group of sub-trees starts by calculating the address of a requested sub-tree root. The calculation involves counting the number of '1' within a sub-field of SI_2(field2), said sub-field ranges between SI_2(field2,1) and SI_2(field2,field3). Said count is multiplied by a entry coefficient to form a root offset, the offset is added to the 30-bit sub-tree leaf address ADDR_2(field2) to provide the address of the (field3)'th sub-tree of the third group of sub-trees, said root is located at ARRAY3(field3).

Step 50 is followed by step 66 of fetching field4 and a first portion of ARRAY(field3) and of checking the (field4)'th bit of SI_3(field3), denoted SI_3(field3, field4). If SI_3(field3, field4) is reset, indicating that a (field4)'th leaf of the (field3)'th sub-tree of the fourth group of sub-trees does not exist, then step 66 is followed by step 68, else step 66 is followed by step 90.

Step 68 of searching for a prefix ending at sub-tree branch starts by fetching the second portion of ARRAY3(field3). Step 68 is followed by step 72 of checking PI_3(field3) and performing a best matching prefix search within the (field3)'th sub-tree. If such a prefix is found step 72 is followed by step 74 of using the next hop ID index INDEX_2(field3) and the results of said search to provide the next hop ID. Else, step 72 is followed by step 76 of checking F_3(field3), if F_3(field3) is set then step 76 is followed by step 82 of using INDEX_3(field3) to provide the next hop ID. If F_3(field3) is reset then step 76 is followed by step 80 of checking F_2(field2). If F_2(field2) is set then step 80 is followed by step 88 of using INDEX_2(field2) to provide the next hop ID. If F_2(field2) is reset then step 80 is followed by step 84 of using INDEX_1(field1) to provide the next hop ID.

Step 90 of fetching the root of the (field4)'th sub-tree of the fourth group of sub-trees starts by calculating the address of said root. The calculation involves counting the number of '1' within a sub-field of SI_3(field3), said sub-field ranges between SI_3(field3,1) and SI_3(field3,field4). Said count is multiplied by an entry coefficient to form a root offset, the offset is added to the 30-bit sub-tree leaf address ADDR_3(field3) to provide the address of the (field4)'th sub-tree of the third group of sub-trees, said root is located at ARRAY4(field4).

Step 90 is followed by step 92 of fetching field5 and a first portion of ARRAY4(field4) and of checking the (field5)'th bit of XI_4(field4), denoted XI_4(field4, field5). If XI_4(field4, field5) is reset, indicating that a (field5)'th leaf of the (field4)'th sub-tree of the fourth group of sub-trees does not exist, then step 92 is followed by step 94, else step 92 is followed by step 96.

Step 92 of checking F_4(field4), if F_4(field4) is set step 96 is followed by step 98 of using INDEX_4(field4) to provide the next hop ID. If F_4(field4) is reset, step 96 is followed by step 100 of checking F_3(field3). If F_3(field3) is set then step 100 is followed by step 102 of using INDEX_3(field3) to provide the next hop ID. If F_3(field3) is reset then step 102 is followed by step 106 of checking F_2(field2). If F_2(field2) is set then step 106 is followed by step 108 of using INDEX_2(field2) to provide the next hop ID. If F_2(field2) is reset then step 106 is followed by step 110 of using INDEX_1(field1) to provide the next hop ID

Step 94 of providing a next hop ID starts by calculating the location of the next hop ID address. The calculation involves counting the number of '1' within a sub-field of XI_4(field3), said sub-field ranges between XI_4(field3,1) and XI_4(field3,field4). Said count is multiplied by a entry coefficient to form a root offset, the offset is added to the 30-bit sub-tree leaf address ADDR_4(field4) to provide said location.

Optionally, when there is no PI_1(field1) field then the second portion of ARRAY1 (field1) is used as an index to list of NHID.

Another aspect of the invention is performing a path compression. Said compression is achieved by storing a list of prefixes in lists instead of storing sparse trees. A user indicator field indicates when such a list exists. A prefix can be described by its value and its length, by a mask and a masked value, the prefix can further be stored in a compressed and in a non compressed form. A predetermined threshold can be used to determine whether to store a tree or a list. For example, and in reference to tree 10 such a threshold is 3 for sub-trees of the fourth group of sub-trees, 4 for sub-trees of the third group of sub-trees, and 5 for sub-trees of the second group of sub-trees.

A list of prefix can start by a header that indicates the number of actual of potential prefixes to be stored within the list. Conveniently such a list has a default NHID, to be used in case the search in the list failed. Alternatively, it can be kept in the parent node instead of the SI field.
It should be noted that the particular terms and expressions employed and the particular structural and operational details disclosed in the detailed description and accompanying drawings are for illustrative purposes only and are not intended to in any way limit the scope of the invention as described in the appended claims.

Thus, there has been described herein an embodiment including at least one preferred embodiment of an improved phase detector and a method for performing address lookups. It will be apparent to those skilled in the art that the disclosed subject matter may be modified in numerous ways and may assume many embodiments other than the preferred form specifically set out and described above. Accordingly, the above disclosed subject matter is to be considered illustrative and not restrictive, and to the maximum extent allowed by law, it is intended by the appended claims to cover all such modifications and other embodiments which fall within the true spirit and scope of the present invention. The scope of the invention is to be determined by the broadest permissible interpretation of the following claims and their equivalents rather than the foregoing detailed description.

## Claims

1. A method for translating a hierarchical address, the method comprising the steps of:
receiving a requested destination address and accessing a tree that stores a plurality of prefixes, the tree having a plurality of sub-trees having sub-trees roots, sub-tree internal nodes and sub-trees leafs, wherein a sub-tree root stores a plurality of sub-tree leaf indications, wherein the sub-tree leaf indicators indicate which of the plurality of possible sub-tree leafs exist;
processing a portion of a requested destination address and selecting a selected sub-tree out of the plurality of sub-trees;
processing another portion of the requested destination address and determining whether a path that represents a prefix continues to lower levels of the tree; and accordingly (A) continuing (38) the search in said lower levels of the tree if the answer is 'yes'; (B) processing (36) the selected sub-tree, if the answer is 'no', wherein during said processing determining (40) whether a path that represents a prefix ends within the selected sub-tree; if the answer is 'yes' using (42) the content of the selected sub-tree root to fetch the next hop ID; if the answer is 'no' searching the higher levels of the tree; and
repeating the steps of processing portions of a requested destination address until a best matching prefix is found; and providing a next hop ID associated to the best matching prefix.

2. The method of step 1 wherein each root sub-tree further stores a plurality of sub-tree internal node indications, wherein the sub-tree internal node indicators indicate which of a possible set of sub-tree internal node exist.

3. The method of claim 1 wherein each root sub-tree further stores a plurality of next hop ID, each associated to an internal node of the sub-tree.

4. The method of claim 1 wherein existing sub-tree leafs of each sub-tree are stored in consecutive order, starting at a sub-tree leaf address, pointed by a sub-tree leaf pointer.

5. The method of claim 3 wherein the sub-tree leaf pointer is stored within the sub-tree root.

6. The method of claim 1 wherein a sub-tree root stores a backtrack field, said field indicates whether a matching prefix ends within said tree.

7. The method of claim 1 wherein a sub-tree root further stores a list field, indicating if a multi-level sub-tree is replaced by a list of prefixes.

8. A method for translating a hierarchical address, the method comprising the steps of:
receiving a requested destination address and accessing a tree that stores a plurality of prefixes, the first levels of the tree are organized in single node having multiple sons, an existing son stores a root of a multi-level sub-tree of a first group of sub-trees, each existing sub-tree leaf of the first group of sub-trees is a root of a multi-level sub-tree of a second group of sub-trees; each existing sub-tree leaf of the second group of sub-trees is a root of a multi-level sub-tree of a third group of sub-trees; each existing sub-tree leaf of the third group of sub-trees is a root of a multi-level sub-tree of a fourth group of sub-trees; each multi-level sub-tree further has sub-tree branches; wherein a sub-tree root stores a plurality of sub-tree leaf indications, wherein the sub-tree leaf indicators indicate which of the plurality of possible sub-tree leafs exist;
processing a first portion of a requested destination address and selecting a selected sub-tree out of the first group of sub-trees;
repeating a step of processing consecutive portion of the requested destination address and determining whether a path that represents a prefix continues to lower levels of the tree, until finding an end of a path and providing the best matching prefix.

9. The method of step 2 wherein each root sub-tree further stores a plurality of sub-tree internal nodes indications, wherein the sub-tree node indications indicators indicate which of a possible set of sub-tree internal nodes exist.

10. The method of claim 7 wherein existing sub-tree leafs of each sub-tree are stored in consecutive order, starting at a sub-tree leaf address, pointed by a sub-tree leaf pointer.

11. The method of claim 10 wherein the sub-tree leaf pointer is stored within the sub-tree root.

12. The method of claim 7 wherein a sub-tree root stores a backtrack field, said field indicates whether a matching prefix ends within said tree.

13. The method of claim 7 wherein a sub-tree root stores further stores a list field, indicating if a multi-level sub-tree is replaced by a list of prefixes.

14. The method of claim 1 wherein each root sub-tree further stores a plurality of next hop ID, each next hop ID associated to an internal node of the sub-tree.
